**Europäisches Patentamt**

**European Patent Office**

**Office européen des brevets**

(19)

(11) Veröffentlichungsnummer: **0 204 364**
A2

# (12) EUROPÄISCHE PATENTANMELDUNG

(21) Anmeldenummer: **86200875.2**

(22) Anmeldetag: **21.05.86**

(51) Int. Cl.⁴: **H 02 M 3/335**

(30) Priorität: **25.05.85 DE 3518913**

(43) Veröffentlichungstag der Anmeldung:
**10.12.86 Patentblatt 86/50**

(84) Benannte Vertragsstaaten:
**AT DE FR GB IT**

(71) Anmelder: **Philips Patentverwaltung GmbH
Billstrasse 80
D-2000 Hamburg 28(DE)**

(84) Benannte Vertragsstaaten:
**DE**

(71) Anmelder: **N.V. Philips' Gloeilampenfabrieken
Groenewoudseweg 1
NL-5621 BA Eindhoven(NL)**

(84) Benannte Vertragsstaaten:
**FR GB IT AT**

(72) Erfinder: **Lösel, Walter, Ing. grad.
Anemonenweg 11
D-8510 Fürth(DE)**

(74) Vertreter: **Peuckert, Hermann et al,
Philips Patentverwaltung GmbH Billstrasse 80 Postfach
10 51 49
D-2000 Hamburg 28(DE)**

(54) **Getakteter Gleichspannungswandler.**

(57) Bei dem beschriebenen Gleichspannungswandler, der einen Transformator enthält, dessen Primärinduktivität mit der Kontaktstrecke eines steuerbaren Schalters in Serie geschaltet ist, wird in den von der Kontaktstrecke des Schalters und der Primärinduktivität gebildeten Gleichstrompfad eine Drossel eingesetzt. Sie begrenzt die Einschaltströme über die Kontaktstrecke des steuerbaren Schalters, die wegen der Wicklungskapazität des Transformators zum Zeitpunkt des Einschaltens hohe Spitzenwerte annehmen. Kurz nach dem Einschalten erreicht das Kernmaterial der Drossel die magnetische Sättigung und wird in diesem Zustand bis zum Öffnen des Schalters gehalten. Dadurch ist die Drossel praktisch nur während des Einschaltzeitpunktes wirksam.

FIG.1

Philips Patentverwaltung GmbH

N.V. Philips'Gloeilampenfabrieken

PHD 204364
09.04.1986

Getakteter Gleichspannungswandler

Die Erfindung betrifft einen getakteten Gleichspannungswandler mit einem Transformator, zu dessen Primärinduktivität die Kontaktstrecke eines steuerbaren Schalters in
Serie geschaltet ist.

Ein solcher Gleichspannungswandler ist beispielsweise aus
der Europäischen Patentanmeldung mit der Veröffentlichungsnummer 0038336 bekannt. Ferner ist aus der genannten Patentanmeldung bekannt, daß wegen der Wicklungskapazitäten des Transformator beim Ein- und Ausschalten
des steuerbaren Schalters, der durch einen bipolaren
Schalttransistor verkörpert ist, Resonanzschwingungen
auftreten, die zu Strom- und Spannungsspitzen über der
Kollektor-Emitter-Strecke des Transistors führen und so
Verluste im Schalttransistor erzeugen. Die Folge davon
ist, daß der Schalttransistor für hohe momentane Leistungen ausgelegt sein muß, der Gleichspannungswandler
damit teurer wird und gleichzeitig sein Wirkungsgrad erheblich verschlechtert werden kann.

Nach der zitierten Patentanmeldung werden die Stromspitzen durch den Schalttransistor dadurch unterdrückt, daß
eine Kontrolleinheit die Resonanzschwingungen überwacht
und die Impulsbreitensteuerung für den Schalttransistor
derart beeinflußt, daß zur Minimalisierung der Verlustleistung z.B. der Einschaltzeitpunkt des Schalttransistors geringfügig verschoben wird.

Die Kontrolleinheit, in der genannten Patentanmeldung
nicht näher beschrieben, ist jedoch eine technisch aufwendige Einrichtung; sie muß einen Nulldurchgangs-

-2-

detektor enthalten, einen Zähler zum Zählen der Nulldurchgänge, sowie einen Zeitgeber, der nach einer vorbestimmten Anzahl von Nulldurchgängen und einer vorbestimmten Verzögerungszeit einen Impuls abgibt.

Der Erfindung liegt die Aufgabe zugrunde, bei einem getakteten Gleichspannungswandler der eingangs genannten
Art die Stromspitzen über die Kontaktstrecke des steuerbaren Schalters mit einfachen Mitteln zu verringern.

Diese Aufgabe wird dadurch gelöst, daß in den von der
primär Induktivität und der Kontaktstrecke des Schalters
gebildeten Gleichstrompfad eine Drossel liegt, deren
Kernmaterial durch den Strom bei eingeschalteten Schalter
in die magnetischen Sättigung gebracht und in ihr gehalten wird.

Ein nach der erfindungsgemäßen Lehre aufgebauter Gleichspannungswandler hat den Vorteil, daß sein Eingangsstrom
nur zu den Einschaltzeitpunkten des Schalters verändert
wird; die sonstigen Eigenschaften des Wandlers bleiben
unverändert. Ist der Widerstand der Kontaktstrecke des
Schalters nicht linear - das ist die Regel - so verbessert sich auch durch die erfindungsgemäße Drossel der
Wirkungsgrad des Gleichspannungswandlers.

Vorteilhafte Ausgestaltungen der Erfindung sind in den
Unteransprüchen angegeben.

Anhand der Figuren soll ein Ausführungsbeispiel der Erfindung näher erläutert werden.
Fig. 1 zeigt das Prinzipschaltbild eines Gleichspannungswandlers nach der Erfindung,
Fig. 2 zeigt Strom- Zeit- Diagramme von Schalterströmen
und

Fig. 3 zeigt die Induktivität einer erfindungsgemäßen Drossel als Funktion des Drosselstroms.

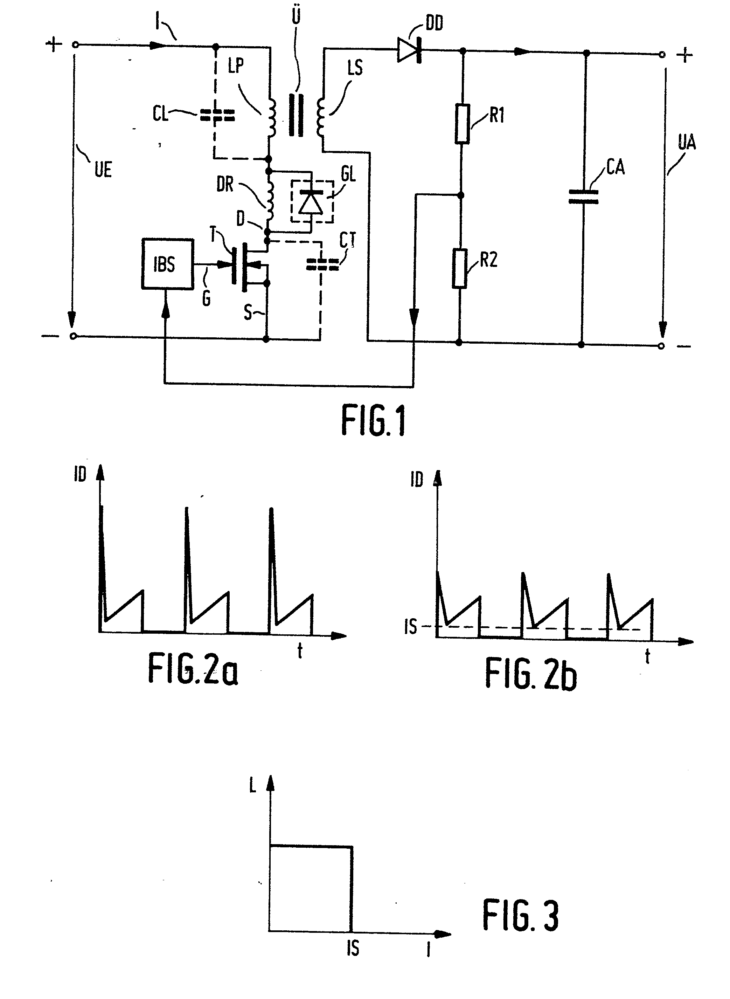

Bei einem Sperrwandler nach Fig. 1 wird eine Eingangsspannung UE in eine geregelte Ausgangsspannung UA umgeformt. Der Transformator Ü dient der Potentialtrennung und der Spannungstransformation, wenn zwischen Eingangs- und Ausgangsspannung erhebliche Unterschiede bestehen.

Die Primärseite des Wandlers enthält eine Serienschaltung aus der Primärinduktivität LP des Transformators Ü, aus der erfindungsgemäßen Drossel DR und aus der Drain-Source-Strecke eines Feldeffekt-Transistors T. Die Ein- und Ausschaltzeiten des Transistors T werden durch eine Impulsbreitensteuerung IBS kontrolliert, die mit dem Gate G des Transistor T verbunden ist. Als Regelgröße wird der Einheit IBS die durch einen Spannungsteiler R1, R2 heruntergeteilte Ausgangsspannung zugeführt. Zusätzliche Mittel zur Potentialtrennung zwischen Primär- und Sekundärseite des Wandlers sind in der Einheit IBS enthalten.

Neben dem Spannungsteiler R1, R2 enthält die Sekundärseite des Wandlers die Sekundärinduktivität LS des Transformators Ü, eine als Schalter wirkende Diode DD und eine Ausgangskapazität CA.

Punktiert eingezeichnet sind die auf seine Primärseite übersetzte Wickelkapazität CL des Transformators Ü und die Kapazität CT zwischen Drain D und Source S des Transistors T. Bei einem Sperrwandler nach Fig. 1 liegen typische Werte für die Kapazität CL bei einigen nF und für die Kapazität CT bei einigen pF.

Wird der Eingangsstrom I durch den Transistor T eingeschaltet, dann wirken zum Einschaltzeitpunkt die punktiert eingezeichneten Kapazitäten CL und CT wie Kurzschlüsse und führen ohne die Drossel DR zu hohen Stromspitzen, die vor allem hohe momentane Verlustleistungen
im Transistor T bewirken und diesen damit gefährden.

In Fig. 2 a ist der gemessene Drain-Strom ID des Transistors T für eine Anordnung nach Fig. 1 ohne die Drossel DR
als Funktion der Zeit aufgetragen. Während der Sperrphase
des Transistors T ist der Strom ID null, während der Einschaltphase steigt er sprungartig auf Werte von etwa 4
bis 8 A an, fällt nach dem Aufladen der Kondensatoren CL
und CT auf etwa 150 bis 250 mA herab und wächst anschließend linear mit der Zeit auf Werte von 1 bis 2 A.

Fig. 2 b zeigt die gleichen Vorgänge mit der erfindungsgemäßen Drossel DR. Die Einschaltstromspitzen liegen
jetzt in der Größenordnung der maximalen Betriebsströme.
Während der Einschaltphase des Transistors T sinkt der
Strom jedoch nicht unter eine Grenze IS von etwa 150 bis
250 mA ab. Wird, wie erfindungsgemäß angegeben, das Kernmaterial der Drossel so gewählt, daß der Grenzstrom IS
zur magnetischen Sättigung führt, so sinkt die Induktivität L der Drossel nach dem Einschaltpunkt praktisch auf
den Wert null herab - vgl. Fig. 3 - und beeinflußt den
weiteren Verlauf des Eingangsstromes während der Einschaltphase nicht.

Verwendet man eine Ringkerndrossel, so wird damit die
elektromagnetische Abstrahlung der Drossel auf ein Minimum reduziert.

Soll nach dem Abschalten des Eingangsstromes I durch den
Transistor T die in der Drossel DR gespeicherte Energie kontrolliert in Wärme umgewandelt werden, so ist der Drossel DL eine Gleichrichterschaltung GL parallel zu schalten, die im einfachsten Falle aus einer Diode besteht. Die Diode ist so gepolt, daß sie die Drossel DR bei leitendem Transistor T nicht kurzschließt. Ist der Durchlaßwiderstand der Diode nicht groß genug, um eine ausreichend schnelle Entmagnetisierung der Drossel DR zu gewährleisten, so ist der Diode ein ohmscher Widerstand in Serie schalten. Ein Kondensator, parallel zu diesem Widerstand geschaltet, sorgt für eine schnelle Zwischenspeicherung der Drosselenergie vor ihrer Umwandlung in Wärme.

Philips Patentverwaltung GmbH

N.V. Philips'Gloeilampenfabrieken

PHD 85327 EP

**0204364**

09.04.1986

Patentansprüche

86200875.2

1. Getakteter Gleichspannungswandler mit einem Transformator, zu dessen Primärinduktivität die Kontaktstrecke eines steuerbaren Schalters in Serie geschaltet ist, dadurch gekennzeichnet, daß in dem von der Primärinduktivität (LP) und der Kontaktstrecke des Schalters (T) gebildeten Gleichstrompfad eine Drossel (DR) liegt, deren Kernmaterial durch den Strom bei eingeschaltetem Schalter (T) in die magnetischen Sättigung gebracht und in ihr gehalten wird.

2. Getakteter Gleichspannungswandler nach Anspruch 1, dadurch gekennzeichnet, daß es sich bei der Drossel (DR) um eine Ringkerndrossel handelt.

3. Getakteter Gleichspannungswandler nach Anspruch 1 oder 2, dadurch gekennzeichnet, daß der Drossel (DR) eine Gleichrichterschaltung (GL) parallel geschaltet ist.

4. Getakteter Gleichspannungswandler nach Anspruch 3, dadurch gekennzeichnet, daß die Gleichrichterschaltung aus einer Diode besteht.

5. Getakteter Gleichspannungswandler nach Anspruch 3, dadurch gekennzeichnet, daß die Gleichrichterschaltung aus der Serienschaltung einer Diode mit einem Widerstand besteht.

6. Getakteter Gleichspannungswandler nach Anspruch 5, dadurch gekennzeichnet, daß dem Widerstand eine Kapazität parallel geschaltet ist.

0204364

FIG.1

FIG.2a

FIG.2b

FIG.3

PHD 85-327